# EUROPEAN PATENT APPLICATION

(11) **EP 4 559 756 A1**
(43) Date of publication of application: **28.05.2025**
(21) Application number: 22951774.3
(22) Date of filing: 31.10.2022
(51) Int. Cl.: B60R 11/02, B60K 35/00

(54) **SLIDING MECHANISM OF VEHICLE-MOUNTED CENTRAL CONTROL SCREEN, AND VEHICLE**

(30) Priority: 18.07.2022 CN 202210843814
(71) Applicant: Voyah Automobile Technology Company Ltd., Hanyang District Wuhan City, Hubei 430050 (CN)
(72) Inventor: YANG, Piao, Wuhan, Hubei 430050 (CN); LIU, Yang, Wuhan, Hubei 430050 (CN); DAI, Lehong, Wuhan, Hubei 430050 (CN); ZHANG, Zhe, Wuhan, Hubei 430050 (CN); WU, Jun, Wuhan, Hubei 430050 (CN)
(74) Representative: Groth & Co. KB
(86) International application number: PCT/CN2022/128808
(87) International publication number: WO 2024/016511

(57) **Abstract**

A sliding mechanism of a vehicle-mounted central control screen, includes a housing (1), a plurality of limiting members (2) arranged at intervals in a lengthwise direction of the housing (1), a first driving mechanism (3), a lead screw (4), and a sliding block support (5), on which the vehicle-mounted central control screen is mounted. The first driving mechanism (3) can drive the sliding block support (5) to move by means of the lead screw (4); and when the sliding block support (5) stops at the limiting member (2), the limiting member (2) and sawteeth of the lead screw (4) are respectively limited to two opposite sides of the sliding block support (5) that are perpendicular to a moving direction of the sliding block support, so that the central control screen is strongly limited at each stop position to prevent the sliding mechanism from vibrating and generating an abnormal sound, thereby improving the reliability of the sliding mechanism, reducing the after-sales fault risk, and realizing reliable multi-gear stop of the central control screen during sliding. Further provided is a vehicle.

## Description

### CROSS-REFERENCE TO RELATED APPLICATION

The present disclosure claims priority to Chinese patent application No. 202210843814.6 filed on July 18, 2022 and entitled "SLIDING MECHANISM OF VEHICLE-MOUNTED CENTRAL CONTROL SCREEN, AND VEHICLE", the entire content of which is incorporated herein by reference.

### TECHNICAL FIELD

The present disclosure relates to a sliding mechanism of a vehicle-mounted central control screen, and a vehicle, and belongs to the technical field of vehicle parts.

### BACKGROUND

At present, there is usually only one vehicle-mounted central control screen in a vehicle, and it is located beside a steering wheel by the driver side, but with the demand for audio and video entertainment by passengers such as the front passenger, if a multimedia screen is added on the front passenger side or a triple monitor is used, the cost of the vehicle will be greatly increased, so there is a need for the central control screen to have a large-span lateral movement function with the requirements of the driver and the passengers.

In the related art, considering the technical difficulty of the rigidity, strength and durability of the whole system, only interior mechanism systems with rotating angles of central control screens, and sliding mechanisms which may hover at any position but cannot ensure reliable stop during dynamic driving of a vehicle due to the lack of strong limit are available on the market.

Therefore, it is necessary to provide a sliding mechanism of a vehicle-mounted central control screen, and a vehicle, so as to solve the above problems.

### SUMMARY OF THE INVENTION

The present disclosure provides a sliding mechanism of a vehicle-mounted central control screen, and a vehicle, so as to solve the technical problems that in the related art, strong limit cannot be achieved due to presence of a gear backlash, and therefore reliable stop cannot be ensured during dynamic driving of a vehicle.

A first aspect of the present disclosure provides a sliding mechanism of a vehicle-mounted central control screen. The sliding mechanism includes: a housing, provided with a plurality of limiting members arranged at intervals in a lengthwise direction of the housing; a first driving mechanism, mounted in the housing, where the first driving mechanism is connected to a lead screw in a motion-transmission manner, and the lead screw extends in the lengthwise direction of the housing; and a slidable block support configured for the vehicle-mounted central control screen to be mounted thereon, where the slidable block support is mounted on the lead screw, and the first driving mechanism can drive the slidable block support to move by means of the lead screw. When the slidable block support stops at one of the limiting members, the limiting member and sawteeth of the lead screw are respectively limited to two opposite sides of the slidable block support in a direction perpendicular to a moving direction of the slidable block support.

A second aspect of the present disclosure provides a vehicle, including the sliding mechanism of the vehicle-mounted central control screen according to any one in the first aspect.

### BRIEF DESCRIPTION OF THE DRAWINGS

FIG. 1 illustrates an explosive structural diagram of a sliding mechanism of a vehicle-mounted central control screen according to one or more implementations of the present disclosure.
FIG. 2 illustrates an overall schematic structural diagram of a sliding mechanism of a vehicle-mounted central control screen according to one or more implementations of the present disclosure.
FIG. 3 illustrates a schematic structural diagram of an upper cover body of the sliding mechanism of the vehicle-mounted central control screen in FIG. 1.
FIG. 4 illustrates a schematic structural diagram of an upper cover body of the sliding mechanism of the vehicle-mounted central control screen in FIG. 1 from another perspective.
FIG. 5 illustrates a schematic structural diagram of a lower cover body of the sliding mechanism of the vehicle-mounted central control screen in FIG. 1.
FIG. 6 illustrates a partial schematic structural diagram of a position A of the lower cover body in FIG. 5.
FIG. 7 illustrates a top-view schematic structural diagram when a sliding mechanism of a vehicle-mounted central control screen stops at a driver position according to one or more implementations of the present disclosure.
FIG. 8 illustrates a sectional schematic structural diagram when the sliding mechanism of the vehicle-mounted central control screen in FIG. 7 stops at the driver position.
FIG. 9 illustrates a top-view schematic structural diagram when a sliding mechanism of a vehicle-mounted central control screen stops at a front passenger position according to one or more implementations of the present disclosure.
FIG. 10 illustrates a sectional schematic structural diagram when the sliding mechanism of the vehicle-mounted central control screen in FIG. 9 stops at the front passenger position.
FIG. 11 illustrates a schematic diagram of a working state of a limiting pawl of the sliding mechanism of the vehicle-mounted central control screen in FIG. 1.
FIG. 12 illustrates a schematic diagram of a state when a sliding mechanism of a vehicle-mounted central control screen moves from a driver to a position between the driver and a front passenger according to one or more implementations of the present disclosure.
FIG. 13 illustrates a schematic diagram of a state when a sliding mechanism of a vehicle-mounted central control screen moves from a front passenger to a position between a driver and the front passenger according to one or more implementations of the present disclosure.
FIG. 14 illustrates a schematic structural diagram of a slidable block support of the sliding mechanism of the vehicle-mounted central control screen in FIG. 1.
FIG. 15 illustrates a schematic structural diagram of a slidable block support of the sliding mechanism of the vehicle-mounted central control screen in FIG. 1 from another perspective.
FIG. 16 illustrates a schematic structural diagram of cooperation between a nut and a lead screw of the sliding mechanism of the vehicle-mounted central control screen in FIG. 1.

Reference numerals: 1, Housing; 11, Upper cover body; 12, Lower cover body; 2, Limiting member; 21, Guide groove; 22, Closed plate; 23, Stopper; 24, Limiting pawl; 241, Sub-pawl; 25, Second driving mechanism; 26, Sliding groove; 3, First driving mechanism; 4, Lead screw; 41, Sawtooth; 5, Slidable block support; 51, First pulley; 52, First limiting portion; 53, Second limiting portion; 54, Nut; 55, Second pulley; 6, Position switch; and 7, Control module.

### DETAILED DESCRIPTION

According to a sliding mechanism of a vehicle-mounted central control screen and a vehicle provided by one or more embodiments of the present disclosure, the problems that in the related art, strong limit cannot be achieved due to presence of a gear backlash, and therefore reliable stop cannot be ensured during dynamic driving of a vehicle can be solved.

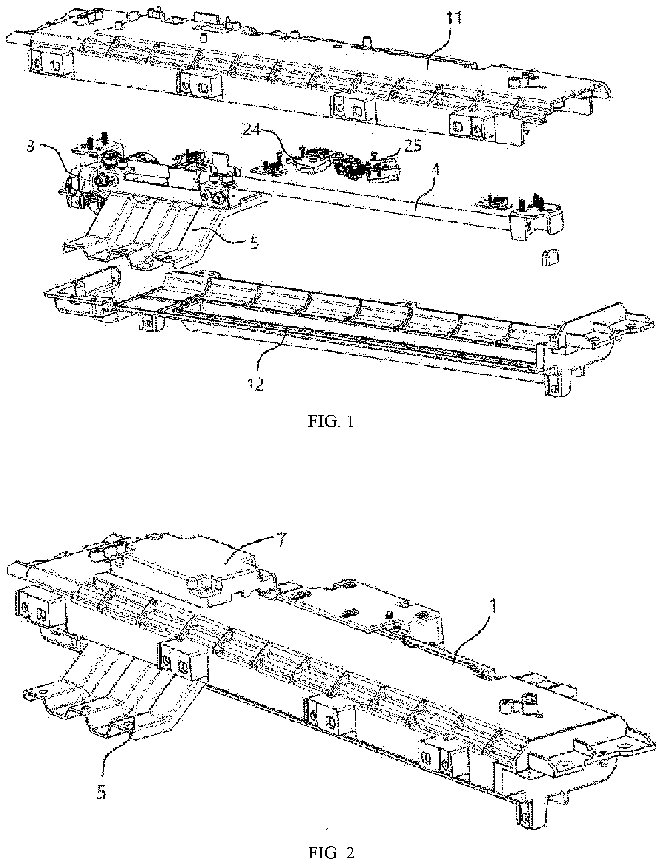

Referring to FIG. 1 and FIG. 2, a first aspect of the present disclosure provides a sliding mechanism of a vehicle-mounted central control screen. The sliding mechanism may include a housing 1, a plurality of limiting members 2, a first driving mechanism 3, a lead screw 4, and a slidable block support 5 configured for the vehicle-mounted central control screen to be mounted thereon. The housing 1 is provided with the plurality of limiting members 2 arranged at intervals in a lengthwise direction of the housing 1; the first driving mechanism 3 is mounted in the housing 1, the first driving mechanism 3 is connected to the lead screw 4 in a motion-transmission manner, and the lead screw 4 extends in the lengthwise direction of the housing 1; the slidable block support 5 is mounted on the lead screw 4, and the first driving mechanism 3 can drive the slidable block support 5 to move by means of the lead screw 4; and when the slidable block support 5 stops at one of the limiting members 2, the limiting member 2 and sawteeth 41 of the lead screw 4 are respectively position-limited to two opposite sides of the slidable block support 5 in a direction perpendicular to a moving direction of the slidable block support 5.

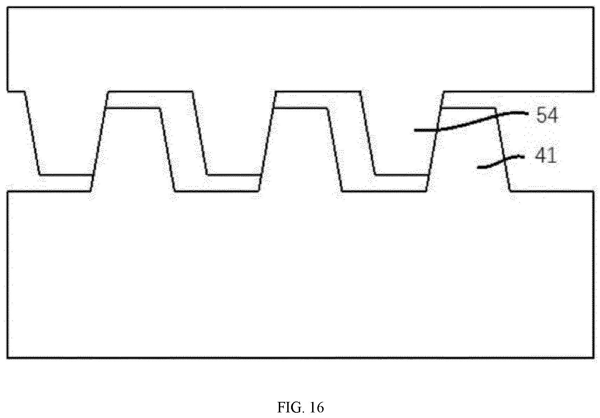

In one or more embodiments, the housing 1 is mounted in a vehicle and extends from a driver position to a front passenger position, the first driving mechanism 3 is mounted at one end of the housing 1, the first driving mechanism 3 may drive the lead screw 4 to rotate, the lead screw 4 is provided with the spiral sawteeth 41, a lead screw support is sleeved with a soft elastic-compressible material, such as rubber, the slidable block support 5 is provided a screw nut 54, the screw nut 54 is sleeved on the lead screw 4 in a penetrating manner, the screw nut 54 is engaged with the sawteeth 41, and when the lead screw 4 rotates, the slidable block support 5 may be driven to move, thus driving the vehicle-mounted central control screen to move. Referring to FIG. 16, when the lead screw 4 drives the slidable block support 5 to move, the engagement relationship between the sawteeth 41 and the screw nut 54 is used to push the slidable block support 5 to move. Therefore, one sawtooth 41 will engage one side of the screw nut 54 to exert thrust on the screw nut, while a gap is generated between the other side of the screw nut 54 and the other sawtooth 41, resulting in the vibration and abnormal sound of the slidable block support 5 due to the failure of strong limit. Therefore, by letting the limiting members 2 engage the other side of the screw nut 54, the limiting members 2 may exert a force on the slidable block support 5 in a direction opposite to that of the sawteeth 41, so that the slidable block support 5 is position-limited by the cooperation between the limiting members 2 and the lead screw 4, the central control screen is strongly limited at each stop position, the vibration and abnormal sound of the mechanism are reduced, the reliability of the mechanism is improved, the after-sale fault risk is reduced, reliable multi-gear stop of the central control screen during transverse sliding can be realized, the vehicle is made to reflect a higher sense of science and technology, the brand's sense of technology and quality are improved, the high cost of multiple screens can be changed, and the sense of ceremony of on-demand movement can be brought at the same time.

In one or more embodiments, when the vehicle-mounted central control screen stops at the driver position, the sawteeth 41 fit on the right side of the screw nut 54, the lead screw 4 exerts a leftward force on the screw nut 54, and the limiting members 2 exert a rightward force on the slidable block support 5, thereby enabling the slidable block support 5 to be limited at the driver position. When the vehicle-mounted central control screen stops at the front passenger position, the sawteeth 41 fit on the left side of the screw nut 54, the lead screw 4 exerts a rightward force on the screw nut 54, and the limiting members 2 exert a leftward force on the slidable block support 5, thereby enabling the slidable block support 5 to be limited at the front passenger position. When the vehicle-mounted central control screen stops at a position between the driver and the front passenger, there are two situations. First, when the vehicle-mounted central control screen moves from the driver position to a certain position between the driver and the front passenger, the lead screw 4 exerts the rightward force on the screw nut 54, and the limiting members 2 exert the leftward force on the slidable block support 5, so that the slidable block support 5 is limited at this position. Second, when the vehicle-mounted central control screen moves from the front passenger position to a certain position between the driver and the front passenger, the lead screw 4 exerts the leftward force on the screw nut 54, and the limiting members 2 exert the rightward force on the slidable block support 5, so that the slidable block support 5 is limited at this position.

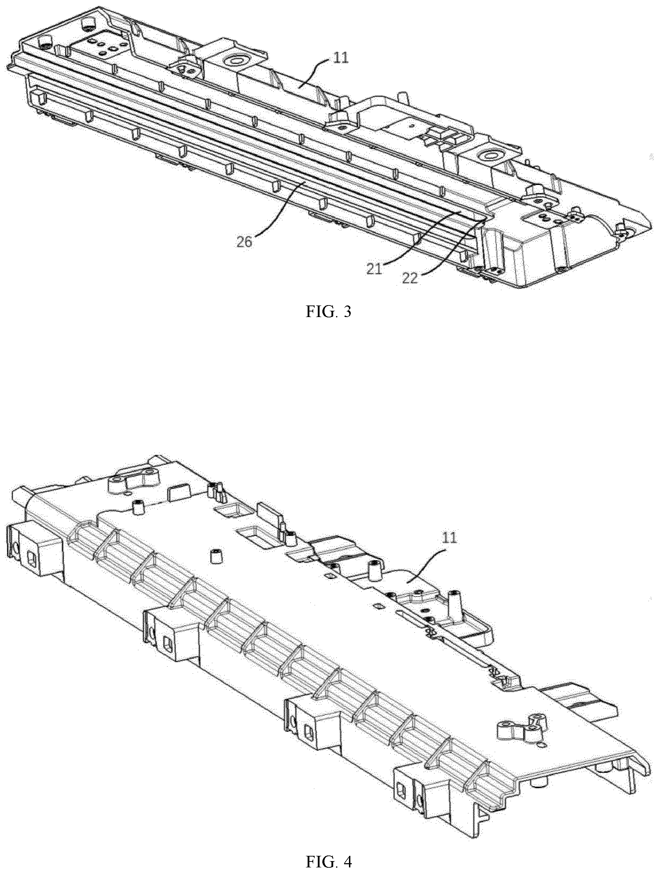

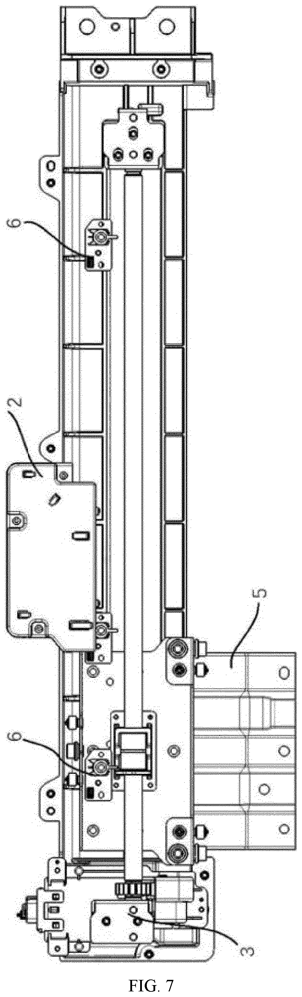

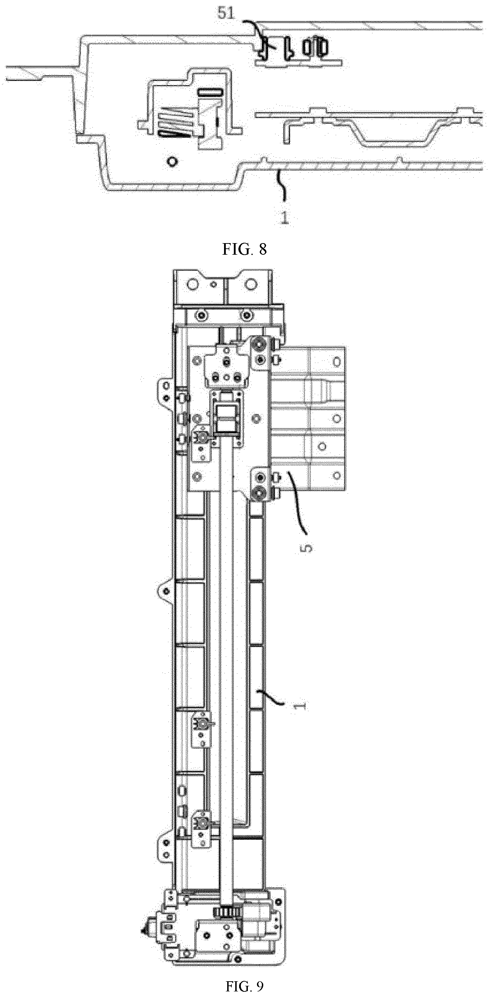

Referring to FIG. 3 and FIG. 4, in some embodiments, the housing 1 may include an upper cover body 11, a guide groove 21 extending in a lengthwise direction of the upper cover body is provided on a top of the upper cover body 11, and a closed plate 22 is provided at one end of the guide groove 21. As shown in FIG. 7 and FIG. 8, first pulleys 51 are provided on a side of the slidable block support 5 close to the guide groove 21, and the first pulleys 51 are slidably mounted in the guide groove 21; and when the slidable block support 5 stops at one of the limiting members 2, the closed plate 22 is position-limited to one side of the first pulleys 51.

In one or more embodiments, the guide groove 21 is arranged on one side of the upper cover body 11 adjacent to the slidable block support 5, each of the first pulleys 51 has an axis perpendicular to a plate-shaped surface of the upper cover body 11, the first pulleys 51 can slide along the guide groove 21, a surface material of the first pulleys 51 is a soft elastic-compressible material, such as rubber, one end of the guide groove 21 is opened to facilitate the first pulleys 51 to be mounted therein, and the other end of the guide groove 21 is closed to limit the first pulleys 51. When used, the closed plate 22 is arranged at one end of the guide groove 21 corresponding to the driver position. When the slidable block support 5 stops at the driver position, the lead screw 4 exerts the leftward force on the screw nut 54, the closed plate 22 exerts the rightward force on the first pulleys 51, and the lead screw 4 and the closed plate 22 jointly limit the slidable block support 5, so that the central control screen reliably stops at the driver position. The structure is simple, operation is easy, and the limiting effect is good. In other embodiments, the closed plate 22 may also be arranged at other position as required to limit the slidable block support 5 stopping at other position.

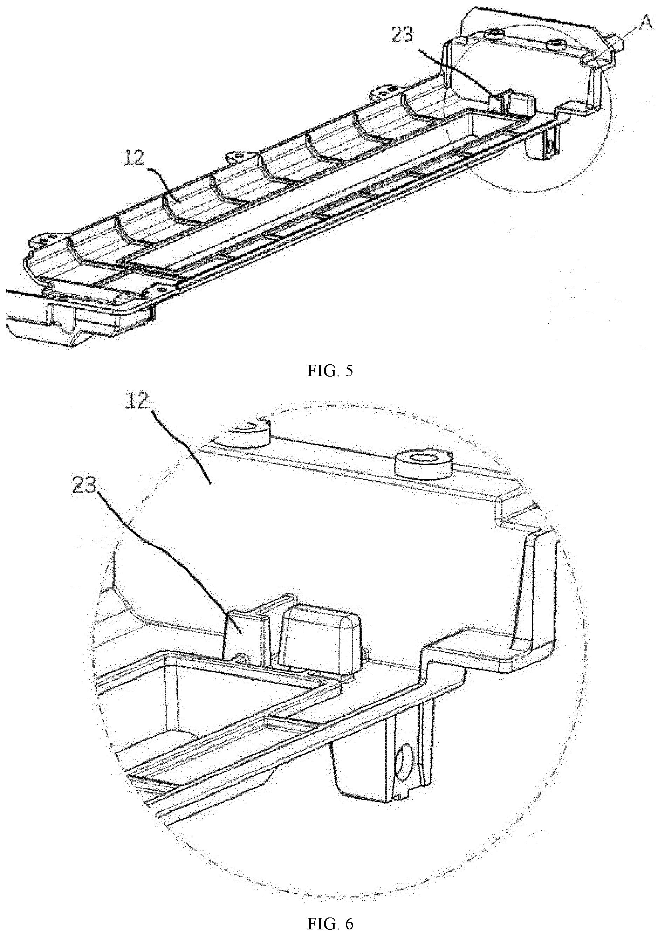

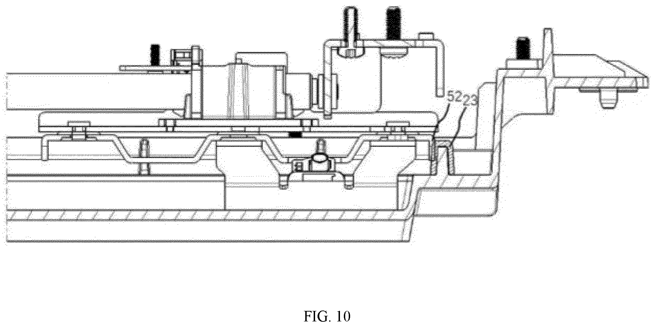

Referring to FIG. 5 and FIG. 6, in some embodiments, the housing 1 may further include a lower cover body 12, and a stopper 23 is provided at one end of the lower cover body 12 away from the closed plate 22. Referring to FIG. 9 and FIG. 10, a first limiting portion 52 is provided on a side of the slidable block support 5 close to the stopper 23, and when the slidable block support 5 stops at one of the limiting members 2, the stopper 23 is position-limited to one side of the first limiting portion 52.

In one or more embodiments, the stopper 23 is arranged on one side of the lower cover body 12 adjacent to the slidable block support 5, the stopper 23 protrudes upward from a plate-shaped surface of the lower cover body 12, and the first limiting portion 52 extends downward from the slidable block support 5, so that the stopper 23 can interfere with the first limiting portion 52. When used, the stopper 23 is arranged at one end of the lower cover body 12 corresponding to the front passenger position. When the slidable block support 5 stops at the front passenger position, the lead screw 4 exerts the rightward force on the screw nut 54, the stopper 23 exerts the leftward force on the first limiting portion 52, and the lead screw 4 and the stopper 23 jointly limit the slidable block support 5, so that the central control screen reliably stops at the front passenger position. The structure is simple, operation is easy, and the limiting effect is good. In other embodiments, the stopper 23 may also be arranged at other position as required to limit the slidable block support 5 stopping at other position.

In one or more embodiments, the end of the guide groove 21 away from the closed plate 22 may also be arranged in a closed shape, and the slidable block support 5 is position-limited when stopping at the front passenger position, but considering that the slidable block support 5 needs to be assembled into the guide groove 21, the other end of the guide groove 21 is made into an opening, and the limiting member 2 at the front passenger position is arranged on the lower cover body 12 to facilitate assembly.

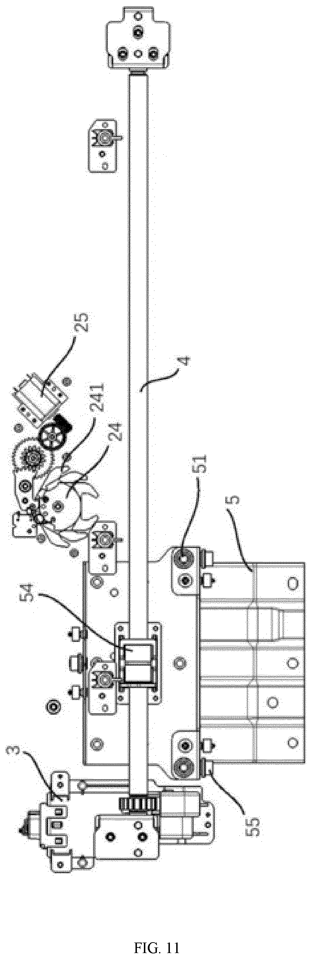

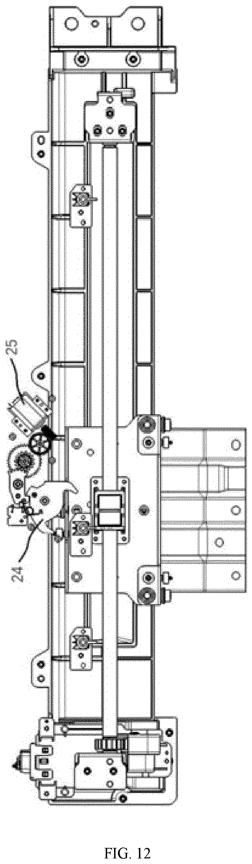

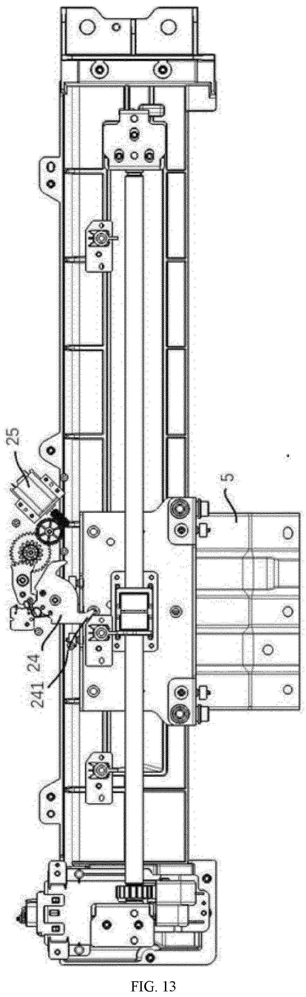

Referring to FIG. 11, FIG. 12 and FIG. 13, in some embodiments, the limiting member 2 may further include a limiting pawl 24 arranged on one side of the housing 1, the limiting pawl 24 is located between the closed plate 22 and the stopper 23, and the limiting pawl 24 is connected to the second driving mechanism 25 in a motion-transmission manner; a second limiting portion 53 is provided on a side of the slidable block support 5 adjacent to the limiting pawl 24; and when the slidable block support 5 stops at one of the limiting members 2, the limiting pawl 24 is position-limited to one side of the second limiting portion 53.

In one or more embodiments, the second limiting portion 53 protrudes upward and extends from the surface of the slidable block support 5, the limiting pawl 24 is a special-shaped pawl, the limiting pawl 24 can move to a moving path of the second limiting portion 53 so that the limiting pawl 24 can interfere with the second limiting portion 53, and the limiting pawl 24 can also move to a moving path away from the second limiting portion 53. When used, the limiting pawl 24 is arranged at a position between the driver and the front passenger, when the slidable block support 5 moves from the driver position to a certain position between the driver and the front passenger, the lead screw 4 exerts the rightward force on the screw nut 54, and the limiting pawl 24 exerts the leftward force on the second limiting portion 53, so that the central control screen reliably stops at this position. When the slidable block support 5 moves from the front passenger position to a certain position between the driver and the front passenger, the lead screw 4 exerts the rightward force on the screw nut 54, and the limiting pawl 24 exerts the leftward force on the second limiting portion 53, so that the central control screen reliably stops at this position. When the central control screen does not stop at a position between the driver and the front passenger, but moves from the driver position to the front passenger position or from the front passenger position to the driver position, the limiting pawl 24 leaves the moving path of the second limiting portion 53, and the slidable block support 5 is free without being limited. The structure is simple, operation is easy, and the limiting effect is good. In other embodiments, the limiting pawl 24 may further be arranged at other one or more positions as required to limit the slidable block support 5 stopping at other positions.

Referring to FIG. 11, FIG. 12 and FIG. 13, in some embodiments, the limiting pawl 24 may comprise two sub-pawls 241, the two sub-pawls 241 are both bent towards a direction close to each other, and the second driving mechanism 25 can drive the limiting pawl 24 to rotate around an axis of the limiting pawl.

In one or more embodiments, the limiting pawl 24 is in a horn shape, and the two sub-pawls 241 constitute two horns and are bent towards a direction close to each other, so as to more reliably limit the slidable block support 5. Specifically, when the slidable block support 5 moves from the driver position to the position between the driver and the front passenger, the second driving mechanism 25 drives the limiting pawl 24 to rotate leftward, so that the sub-pawl 241 on the right side moves to the moving path of the second limiting portion 53, and the sub-pawl 241 exerts the leftward force on the second limiting portion 53, and matches with the lead screw 4 to make the central control screen reliably stop. When the slidable block support 5 moves from the front passenger position to the position between the driver and the front passenger, the second driving mechanism 25 drives the limiting pawl 24 to rotate rightward, so that the sub-pawl 241 on the left side moves to the moving path of the second limiting portion 53, and the sub-pawl 241 exerts the rightward force on the second limiting portion 53, and matches with the lead screw 4 to make the central control screen reliably stop.

Referring to FIG. 2, in one or more embodiments, a control module 7 may also be mounted on the housing 1, the control module 7 is electrically connected to the first driving mechanism 3 and the second driving mechanism 25, and the control module 7 can control the first driving mechanism 3 to drive the lead screw 4 to drive the central control screen to move, and can also control the second driving mechanism 25 to drive the limiting pawl 24 to rotate, so that use is more convenient.

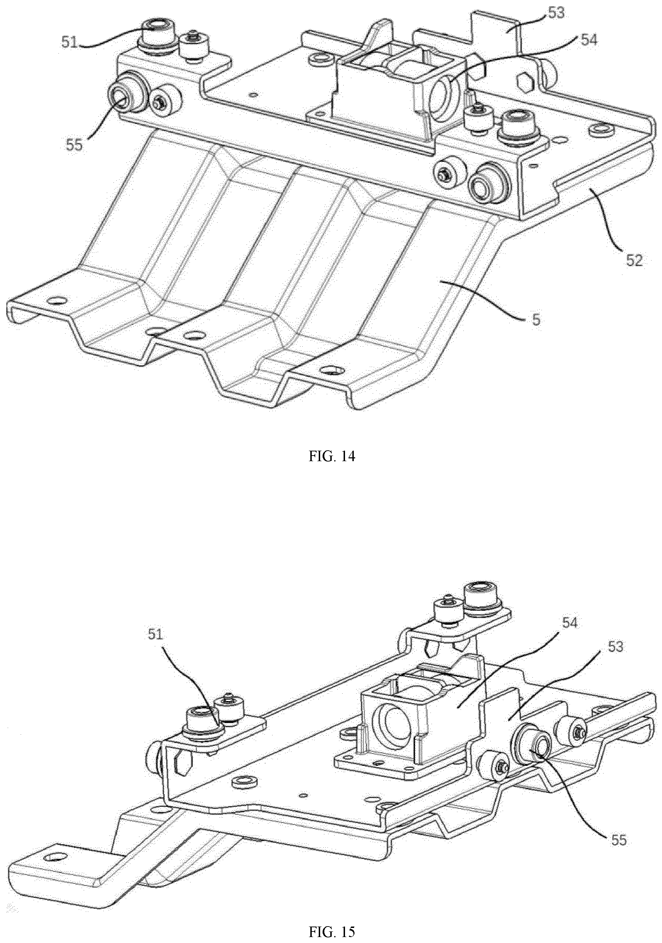

Referring to FIG. 14 and FIG. 15, in some embodiments, second pulleys 55 are provided on two opposite sides of the slidable block support 5 in a moving direction of the slidable block support, and axes of the second pulleys 55 has an axis perpendicular to the axis of the corresponding first pulley 51. Referring to FIG. 3, sliding grooves 26 extending in the lengthwise direction of the upper cover body are provided on both sides of the upper cover body 11, and the second pulleys 55 can slide along the sliding grooves 26.

Referring to FIG. 14 and FIG. 15, in one or more embodiments, connecting plates are provided on two opposite sides of the slidable block support 5 in the moving direction of the slidable block support 5, the connecting plates extend vertically upward from a bottom plate-shaped surface of the slidable block support 5, the second pulleys 55 are arranged on the outer sides of the connecting plates, the second limiting portion 53 is arranged on the connecting plate a on one side and formed by protruding the upper surface of the connecting plate upward, the upper part of the connecting plate b on the other side is bent vertically in a horizontal shape towards the side close to the second limiting portion 53, and the first pulleys 51 are mounted on the bent surface, so that each of the first pulleys 51 has an axis perpendicular to the axis of the corresponding second pulley 55. The sliding grooves 26 are formed on the side surface of the upper cover body 11, and the opening direction of the sliding grooves 26 is perpendicular to the opening direction of the guide groove 21. When the lead screw 4 drives the slidable block support 5 to move, the second pulleys 55 can move along the sliding grooves 26, and the sliding grooves 26 play a guiding and load-bearing role, while the first pulleys 51 move along the guide groove 21, and the closed plate 22 at the end of the guide groove 21 plays a limiting role, making the slidable block support 5 run more stably and keeping stability of the central control screen.

Referring to FIG. 7, in one or more embodiments, a plurality of position switches 6 may further be mounted on the housing 1, and the plurality of position switches 6 are respectively provided at corresponding positions adjacent to the plurality of limiting members 2 and are respectively spaced apart from the limiting members 2 by a preset distance.

In one or more embodiments, each position switch 6 includes a bottom plate and a shift knob mounted on the bottom plate, the shift knob has a shift claw extending onto a moving path of the slidable block support 5, the shift knob is provided with a sensor, and the sensor is electrically connected to the control module 7. When the slidable block support 5 moves to be close to the limiting members 2, the shift claw will be pulled when the slidable block support passes through the position switch 6, and the rotation of the shift claw will drive the shift knob to rotate. After sensing, the sensor transmits a signal to the control module 7, the control module 7 determines that the slidable block support 5 moves near the stop position according to the signal, thus controlling the first driving mechanism 3 to slow down, so that the moving speed of the slidable block support 5 is reduced, and the slidable block support gradually moves to make contact with the limiting members 2, a buffering role is achieved, and the slidable block support 5 is prevented from moving too fast and impacting the housing 1 or the limiting members 2 to cause the slidable block support 5 to be damaged or produce noise. In one or more embodiments, the position switches 6 are arranged in the vicinity of the driver, the front passenger and a preset position in the middle, ensuring that the slidable block support 5 passes through the position switches 6 before making contact with the limiting members 2, and the distance between the position switches 6 and the limiting members 2 may be set as required.

A second aspect of the present disclosure provides a vehicle, including the sliding mechanism of the vehicle-mounted central control screen according to any one in the above first aspect. The vehicle may implement any embodiment of the sliding mechanism of the vehicle-mounted central control screen in the above first aspect.

The principle of the sliding mechanism of the vehicle-mounted central control screen and the vehicle provided by the embodiments of the present disclosure is as follows:
A vehicle ECU outputs a required stop position of the central control screen, when stopping at the driver position, the central control screen is strongly position-limited jointly by the lead screw 4 and the closed plate 22; when stopping at the front passenger position, the central control screen is strongly position-limited jointly by the lead screw 4 and the stopper 23; and when stopping between the driver and the front passenger, the central control screen is strongly position-limited jointly by the lead screw 4 and the limiting pawl 24. Therefore, the stop position of the central control screen is in a strong limit state, the vibration and abnormal sound of the mechanism are avoided, the reliability of the mechanism is improved, the after-sale fault risk is reduced, and the reliable multi-gear stop of the central control screen during transverse sliding can be realized.

According to the sliding mechanism of the vehicle-mounted central control screen and the vehicle provided by one or more embodiments of the present disclosure, the slidable block support with the central control screen mounted is position-limited by cooperation of the limiting members and the lead screw, so that the stop position of the central control panel is in a strong limit state, the vibration and abnormal sound of the mechanism are avoided, the reliability of the mechanism is improved, the after-sale fault risk is reduced, the reliable multi-gear stop of the central control screen during transverse sliding can be realized, the vehicle is made to reflect a higher sense of science and technology, and the brand's sense of technology and quality are improved.

In the description of the present disclosure, it should be noted that the terms "upper", "lower", etc. designate orientations or positional relationships based on the orientations or positional relationships shown in the accompanying diagrams, are merely for convenience in describing and simplifying the present disclosure, and do not indicate or imply that the referenced apparatuses or elements must have a particular orientation, be constructed and operated in a particular orientation, and thus are not to be construed as limiting the present disclosure. Unless otherwise expressly specified and limited, the terms "mounted", "connected", "connection" should be understood in a broad sense, for example, it may be a fixed connection, a detachable connection, or an integral connection; or it may be a mechanical connection or an electrical connection; or it may be a direct connection or an indirect connection through an intermediate medium; or it may be the communication between two elements. The specific meaning of the above terms in the present disclosure may be understood by those of ordinary skill in the art depending on the particular circumstances.

It should be noted that in the present disclosure, relational terms such as "first" and "second" are only used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements not only includes those elements, but also includes other elements not clearly listed, or also includes elements inherent to this process, method, article or device. An element proceeded by the phrase "comprises a" does not, without more constraints, preclude the existence of additional identical elements in the process, method, article, or device that includes the element.

The above are only specific implementations of the present disclosure to enable persons skilled in the art to understand or implement the present disclosure. Various modifications to these embodiments will be readily apparent to persons skilled in the art, and the generic principles defined herein may be implemented in other embodiments without departing from the spirit or scope of the present disclosure. Thus, the present disclosure is not intended to be position-limited to the embodiments shown herein but is to be accorded the widest scope consistent with the principles and novel features disclosed herein.

## Claims

1. A sliding mechanism of a vehicle-mounted central control screen, comprising:
a housing (1), provided with a plurality of limiting members (2) arranged at intervals in a lengthwise direction of the housing (1);
a first driving mechanism (3), mounted in the housing (1), wherein the first driving mechanism (3) is connected to a lead screw (4) in a motion-transmission manner, and the lead screw (4) extends in the lengthwise direction of the housing (1); and
a slidable block support (5) configured for the vehicle-mounted central control screen to be mounted thereon, wherein the slidable block support is mounted on the lead screw (4), and the first driving mechanism (3) can drive the slidable block support (5) to move by means of the lead screw (4); and
when the slidable block support (5) stops at one limiting member (2) of the limiting members, the limiting member (2) and sawteeth (41) of the lead screw (4) are respectively position-limited to two opposite sides of the slidable block support (5) in a direction perpendicular to a moving direction of the slidable block support.

2. The sliding mechanism of the vehicle-mounted central control screen according to claim 1, wherein
the housing (1) comprises an upper cover body (11), a guide groove (21) extending in a lengthwise direction of the upper cover body is provided on a top of the upper cover body (11), and a closed plate (22) is provided at one end of the guide groove (21);
a first pulley (51) is provided on a side of the slidable block support (5) adjacent to the guide groove (21), and slidably mounted in the guide groove (21); and when the slidable block support (5) stops at one of the limiting members (2), the closed plate (22) is position-limited to one side of the first pulley (51).

3. The sliding mechanism of the vehicle-mounted central control screen according to claim 2, wherein
the housing (1) further comprises a lower cover body (12), and a stopper (23) is provided at one end of the lower cover body (12) away from the closed plate (22); and
a first limiting portion (52) is provided on a side of the slidable block support (5) adjacent to the stopper (23), and when the slidable block support (5) stops at one of the limiting members (2), the stopper (23) is position-limited to one side of the first limiting portion (52).

4. The sliding mechanism of the vehicle-mounted central control screen according to claim 3, wherein
the limiting member (2) further comprises a limiting pawl (24) provided on a side of the housing (1), and the limiting pawl (24) is located between the closed plate (22) and the stopper (23), and the limiting pawl (24) is connected to a second driving mechanism (25) in a motion-transmission manner;
a second limiting portion (53) is provided on a side of the slidable block support (5) adjacent to the limiting pawl (24), and when the slidable block support (5) stops at one of the limiting members (2), the limiting pawl (24) is able to be position-limited to one side of the second limiting portion (53).

5. The sliding mechanism of the vehicle-mounted central control screen according to claim 4, wherein
the limiting pawl (24) comprises two sub-pawls (241), the two sub-pawls (241) are both bent towards a direction close to each other, and the second driving mechanism (25) can drive the limiting pawl (24) to rotate around an axis of the limiting pawl.

6. The sliding mechanism of the vehicle-mounted central control screen according to claim 4, wherein
a control module (7) is further mounted on the housing (1), and the control module (7) is connected to both the first driving mechanism (3) and the second driving mechanism (25).

7. The sliding mechanism of the vehicle-mounted central control screen according to claim 2, wherein
second pulleys (55) are provided on two opposite sides of the slidable block support (5) in a moving direction of the slidable block support, and each of the second pulleys (55) has an axis perpendicular to an axis of the first pulley (51); and
sliding grooves (26) extending in the lengthwise direction of the upper cover body are provided on both sides of the upper cover body (11), and the first pulley (51) is configured to slide along one of the sliding grooves (26).

8. The sliding mechanism of the vehicle-mounted central control screen according to claim 1, wherein
a plurality of position switches (6) are also mounted on the housing (1), and the plurality of position switches (6) are respectively provided at corresponding positions adjacent to the plurality of limiting members (2) and are respectively spaced apart from the limiting members (2) by a preset distance.

9. The sliding mechanism of the vehicle-mounted central control screen according to claim 1, wherein
the slidable block support (5) is provided with a screw nut (54), the screw nut (54) is sleeved on the lead screw (4) in a penetrating manner, and the sawteeth (41) of the lead screw (4) are engaged with the screw nut (54).

10. A vehicle, comprising the sliding mechanism of the vehicle-mounted central control screen according to any one of claims 1 to 9.
